# EUROPÄISCHE PATENTSCHRIFT

(11) **EP 1 920 731 B1**
(45) Veröffentlichungstag und Bekanntmachung des Hinweises auf die Patenterteilung: **20.07.2016**
(21) Anmeldenummer: 07021489.5
(22) Anmeldetag: 05.11.2007
(51) Int. Cl.: A61C 13/00, A61C 13/12, A61C 9/00

(54) **Vorrichtung zum Halten eines Modells**
Device for holding a model
Dispositif destiné à maintenir un modèle

(30) Priorität: 07.11.2006 DE 102006052420
(43) Veröffentlichungstag der Anmeldung: 14.05.2008
(60) Teilanmeldung: 10151569.0
(73) Patentinhaber: Institut Straumann AG, 4002 Basel (CH)
(72) Erfinder: Holzner, Stephan, 80269 Hohenschäftlarn (DE); Weber, Gerhard, 86932 Pürgen (DE)
(74) Vertreter: Grünecker Patent- und Rechtsanwälte PartG mbB

(56) Entgegenhaltungen:
- US-A1- 2001 029 010
- US-A1- 2001 034 010
- US-A1- 2003 123 943
- US-A1- 2004 032 594
- US-A1- 2005 254 064
- US-A1- 2006 093 204
- US-A1- 2006 115 784
- US-A1- 2006 127 858
- US-B1- 6 224 371
- US-B1- 6 640 150
- US-B1- 6 766 217

## Beschreibung

Die Erfindung betrifft eine Vorrichtung zum Halten eines Modells eines Abutments, im Folgenden Zahnersatzteil genannt und eine Vorrichtung zum Scannen von Abutments.

Das Modellieren von Zahnersatzteilen, also eines Abutments, ist bekannt. Ein Abutment ist ein Teil einer zahnärztlichen Versorgung, das auf ein Implantat z.B. aufgeschraubt wird. Auf das Abutment kann eine Krone oder eine Brücke oder anderes aufgesetzt werden.

In der Regel werden Standard-Abutments verwendet, die einem entsprechendem Implantat angepasst bzw. zugeordnet sind.
Aus der US 6,640,150 B1 ist ein Halter für eine Modell eines Zahnersatzteils bekannt.
Aus der US 6,224,371 B1 ist ein Unterstützungsteil für die Herstellung eines Zahnersatzteils bekannt.

Aufgabe der vorliegenden Erfindung ist es, Mittel und Verfahren anzugeben, mit denen eine automatisierte Herstellung von individuellen Abutments oder anderen Zahnersatzteilen ermöglicht wird. Diese Aufgabe wird gelöst mit einer Vorrichtung zum Halten nach Anspruch 1 und einer Vorrichtung zum Scannen von Abutments nach Anspruch 7. Bevorzugte Ausführungsformen sind in den Unteransprüchen offenbart.

Die Vorrichtung zum Halten eines Modells eines Zahnersatzteils, also eines Abutments, hat zwei Bereiche. Auf dem ersten Bereich kann das Modell eines Zahnersatzteils aufmodelliert oder ein entsprechendes Modell aufgesetzt werden. Der zweite Bereich erlaubt eine eindeutige Lageidentifizierung der Vorrichtung zum Halten. Der zweite Bereich wird vorzugsweise von dem Modell des Zahnersatzteils nicht abgedeckt, sodass dieser zweite Bereich optisch zugängig bleibt.

Ein solches Modell eines Zahnersatzteils kann beispielsweise aus Wachs modelliert werden, wodurch sich eine leichte, schnelle und individuelle sowie auch wohl bekannte Modellierungsart einsetzen lässt.

Die Vorrichtung zum Halten ist vorzugsweise so dimensioniert, dass sie nur ein Modell eines Zahnersatzteils aufweisen kann, dass einem einzelnen Zahn zugeordnet werden kann, also ein Abutment, das zu genau einem Implantat (an Stelle eines Zahns) gehört.

Mit dem zweiten Bereich kann die Lage der Vorrichtung zum Halten erkannt werden. Ist die Lage der Vorrichtung zum Halten bekannt, ist damit auch die Lage des ersten Bereichs bekannt. Da das Modell auf dem ersten Bereich aufmodelliert oder aufgesetzt ist, kann durch die Ermittlung der Außenform des Modells und durch die Ermittlung der Lage der Vorrichtung zum Halten und damit der des ersten Bereichs auch die Innenform des Zahnersatzteils definiert werden.

Der erste Bereich entspricht bereits der gewünschten Innenform eines Zahnersatzteils oder in dem ersten Bereich ist eine Aufnahme für ein Modellstück ausgebildet, wobei dieses Modellstück der Innenform des Zahnersatzteils entsprechen soll. Auf diese Weise ist es bei dem Modellieren des Zahnersatzteils möglich, die später im realen Zahnersatzteil vorkommende Innenform zu berücksichtigen.

Der zweite Bereich umfasst vorzugsweise zumindest eine, zwei, drei oder mehr ebene Flächen. Derartige ebene Flächen lassen sich vorteilhaft für die Lageidentifizierung der Vorrichtung zum Halten ausnutzen.

Weiterhin weist der zweite Bereich eine, zwei, drei oder mehr Formmarkierungen auf. Formmarkierungen sind solche, die durch die Form gegeben werden. Mögliche Varianten einer Formmarkierung umfassen Erhöhung, Kugel, Halbkugel, eine Kegel- oder eine Pyramidenform, wobei die Formmarkierung als Positivform, d. h. als Erhebung ausgebildet ist. Auch mehrere dieser verschiedenen möglichen Formmarkierungen, der gleichen oder verschiedener Art, zusammen sind möglich.

Mit derartigen Formmarkierungen, die leicht beispielsweise mit einem optischen oder mechanischen Scanner erkannt werden können, lässt sich sehr präzise die Lage der Vorrichtung zum Halten identifizieren.

Der zweite Bereich umfasst vorzugsweise weiterhin einen Verbindungsteil, der mit dem ersten Bereich verbunden ist. Auch ein solcher Verbindungsteil kann mit einem Scanner in der Regel gut erfasst werden und erlaubt somit Informationsgewinnung für eine Lageidentifizierung der Vorrichtung zum Halten. Dadurch, dass der Verbindungsteil mit dem ersten Teil verbunden ist, ist er auch recht nahe des Modells des Zahnersatzteils, sodass er unter Umständen mit ein- und demselben Scanvorgang, mit dem das Zahnersatzteilmodell abgescannt wird, mit abgescannt werden kann.

Der Verbindungsteil hat ebenfalls eine vorzugsweise einfache geometrische Form, wie stabförmig oder scheibenförmig, da dies die Lageidentifizierung in bevorzugter Weise ermöglicht. Besonders vorteilhaft ist hierbei, wenn der Verbindungsteil von einer ebenen Fläche absteht. Dies erleichtert die Identifizierung des Verbindungsteils als solches für die Auswertung von Scandaten bei der Lageidentifizierung.

Die Vorrichtung zum Halten hat weiterhin ein Halteteil mit dem die Vorrichtung in einem Halter gehalten werden kann. Dieser Halteteil ist beispielsweise stabförmig, sodass er in eine entsprechende Hülse eines Halters leicht eingeführt werden kann. (Der Begriff "Halter" wird für diejenige Einrichtung verwendet, die zum Halten der "Vorrichtung zum Halten" vorgesehen ist.)

Der Halteteil ist so ausgebildet, dass eine Halterung der Vorrichtung zum Halten in einer eindeutigen Lage möglich ist. Bei einem zylinderförmigen, stabförmigen Halteteil kann dies beispielsweise durch eine Abflachung des Zylinders an einer oder mehreren Seiten erreicht werden.

Eine Vorrichtung zum Scannen von Abutments ist mit einem Halter ausgerüstet, in dem eine oben erwähnte Vorrichtung mit einer eindeutigen Lageorientierung gehalten werden und abgescannt werden kann. Mit einem solchen Scanner können beispielsweise Kiefermodelle und/oder Zahnmodelle und/oder Sägezahnmodellabschnitte oder andere Objekte für eine Dentalversorgung abgescannt werden. Mit ein- und demselben Scanner kann auch ein Modell eines Zahnersatzteils, wie das für ein Abutment, abgescannt werden. Die Vorrichtung weist hierzu einen Halter auf, der eine (zumindest im groben) eindeutige Lageorientierung erlaubt.

Bei einem Verfahren zum Erstellen eines digitalen Modells eines Zahnersatzteils, also eines Abutments, kann zunächst ein Zahnersatzteil an der Vorrichtung zum Halten modelliert oder aufgesetzt werden. Ein solches Zahnersatzteilmodell kann dann zusammen mit der Vorrichtung zum Halten abgescannt werden. Hierzu können Zahnersatzteilmodelle und die Vorrichtung zum Halten mit einem oder mehreren Scanvorgängen gleichzeitig und/oder nacheinander erfasst werden. Die Daten von mehreren Scanvorgängen können mit einem Matchingverfahren zu umfassenderen Datensätzen zusammengesetzt werden. Die Scandaten können dann ausgewertet werden, um zum Einen einen Teil der Form des Zahnersatzteilsmodells und zum Anderen die Lage der Vorrichtung zum Halten zu erfassen.

Die Modellierung des Zahnersatzteils und/oder das Abscannen können an anderen Orten als das Auswerten der Scanndaten erfolgen. Letzteres kann beispielsweise in einem Fertigungszentrum geschehen, wohingegen das Modellieren und/oder das Abscannen bei einem Dentaltechniker und/oder bei einem Zahnarzt erfolgen kann. Diese Schritte können aber auch alle an einem Ort durchgeführt werden.

Bei dem Verfahren kann vorzugsweise eine Vorrichtung zum Halten, wie sie oben beschrieben worden ist, eingesetzt werden. Auch kann ein solches Verfahren vorzugsweise mit der oben beschriebenen Vorrichtung zum Scannen von Abutments durchgeführt werden.

Mit einem solchen Verfahren ist es dann beispielsweise möglich, die Innenform des Zahnersatzteils durch die erkannte Lage der Vorrichtung zum Halten festzulegen.

Bei einem Verfahren zum Herstellen eines Zahnersatzteils wird zunächst ein digitales Modell, wie oben beschrieben, erstellt und anschließend das Zahnersatzteil unter Zuhilfenahme des digitalen Modells hergestellt. Hierfür sind bekannte CAM-Verfahren, wie Fräsen, 3D-Lithografie oder Ähnliches möglich.

Ein so hergestelltes Zahnersatzteil kann aus Keramik, Metall, Gold, Metalllegierung, keramischen Legierungen, Kunststoffen oder Ähnlichem bestehen.

Bevorzugte Ausführungsformen der Erfindung sollen anhand der beigefügten Figuren erläutert werden. Dabei zeigt:
- Figur 1: eine Vorrichtung zum Halten eines Modells gemäß einem ersten Ausführungsbeispiel der Erfindung;
- Figur 2: eine Vorrichtung zum Halten eines Modells gemäß einer zweiten Ausführungsform;
- Figur 3: die Vorrichtung aus Figur 2 mit einem Modell;
- Figur 4: Varianten einer Formmarkierung;
- Figur 5: schematische Darstellung der Daten zur Erstellung eines digitalen Modells eines Zahnersatzteils.

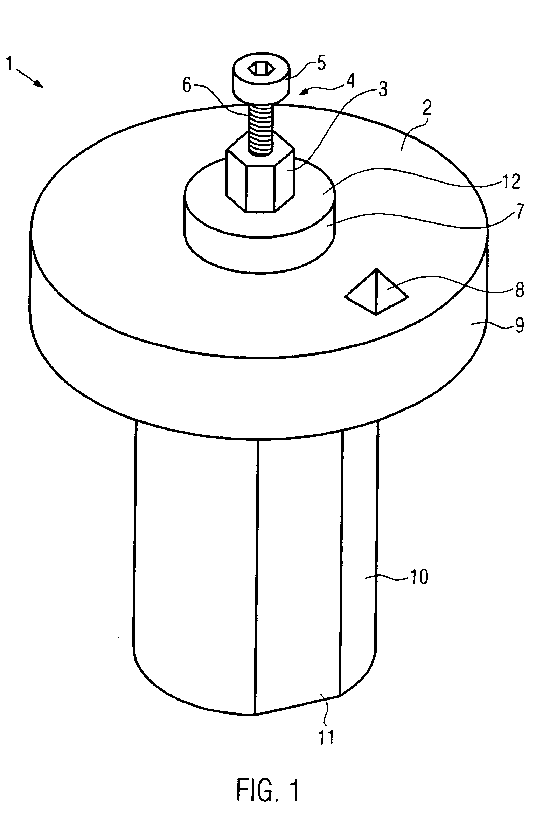

In Figur 1 ist eine Vorrichtung 1 zum Halten eines Modells eines Zahnersatzteils gezeigt. Die Vorrichtung 1 umfasst ein scheibenförmiges Element 9 mit einer ebenen Oberfläche 2. Von dieser ebenen Oberfläche 2 erhebt sich ein Verbindungsteil 7, das hier scheibenförmig mit einem kreisförmigen Querschnitt ausgebildet ist. Sowohl für die Scheibe 9 als auch unabhängig davon für die Schreibe 7 sind andere Querschnittsformen als kreisrund möglich, wie etwa quadratisch, rechteckig, dreieckig, sechseckig, polygonal oder elliptisch oder Anderes.

Auf der ebenen Oberfläche 2 ist eine Formmarkierung in Form einer Viereckspyramide 8 dargestellt. Diese Formmarkierung 8 erlaubt eine eindeutige Lageidentifizierung des zweiten Bereichs. Der zweite Bereich umfasst hier die Scheibe 9 und die Scheibe 7 sowie die Formmarkierung 8. Auf der Scheibe 7 ist eine mögliche Innenform eines Abutments angeordnet. Dies umfasst ein stabförmiges Element 3 mit einem hexagonalen Querschnitt. Hier sind auch andere Querschnittsformen möglich, wie etwa quadratisch, rechteckig, kreisrund, dreieckig, fünfeckig, achteckig oder sonst wie polygonal oder elliptisch. Das stabförmige Element 3 kann fest auf der Scheibe 7 angeordnet sein und z. B. einstückig mit diesem ausgebildet worden sein. Es kann jedoch auch in eine entsprechende Aufnahme in der Scheibe 7 eingesetzt worden sein.

In dem Beispiel, wie es in Figur 1 gezeigt ist, weist das stabförmige Element 3 eine Gewindebohrung auf, in die eine Schraube 4 eingeschraubt werden kann. Die Schraube 4 hat ein Gewinde 6, mit dem sie in die Gewindebohrung eingeschraubt wird und einen Kopf 5, der hier beispielsweise einen Imbusschraubenkopf darstellt. Die Schraube 4 entspricht einer solchen Schraube, mit der ein Abutment beispielsweise an ein Implantat festgeschraubt werden kann.

Die Darstellung in Figur 1 für das stabförmige Element 3 und die Schraube 4 sind lediglich beispielhaft. Je nach gewünschter Innenform des Zahnersatzteils, also eines Abutments, kann hier jede beliebige Form vorhanden sein.

Der erste Bereich wird hier in diesem Beispiel durch die Oberfläche 12 der Scheibe 7, das stabförmige Element 3 und die Schraube 4 gegeben.

Die Vorrichtung 1 umfasst einen Halteteil 10, der hier stabförmig ausgebildet ist. Dieser ist mit einer Abflachung 11 an einer Seite versehen. Durch diese Abflachung lässt sich die Vorrichtung in einer eindeutigen Lage halten.

Diese eindeutige Lagerung kann jedoch unter Umständen nicht präzise genug sein, um hieraus auf die Innenform des Modells des Zahnersatzteils schließen zu können. Von daher ist hier eine Erfassung der Lage durch den zweiten Bereich mit der Formmarkierung vorgesehen.

Durch jedoch zumindest eine im groben eindeutige Lagerung befindet sich z. B. eine Formmarkierung 8 an einer im groben vorbestimmten Stelle. Nur an dieser im groben vorbestimmten Stelle muss dann mit einem Scanverfahren und der entsprechenden Datenauswertung nach der Formmarkierung gesucht werden, so dass diese dann nicht nur grob, sondern präzise in ihrer Lage bestimmt werden kann.

Je mehr Formmarkierungen vorgesehen sind, desto präziser kann die Lage der Vorrichtung zum Halten erfasst werden.

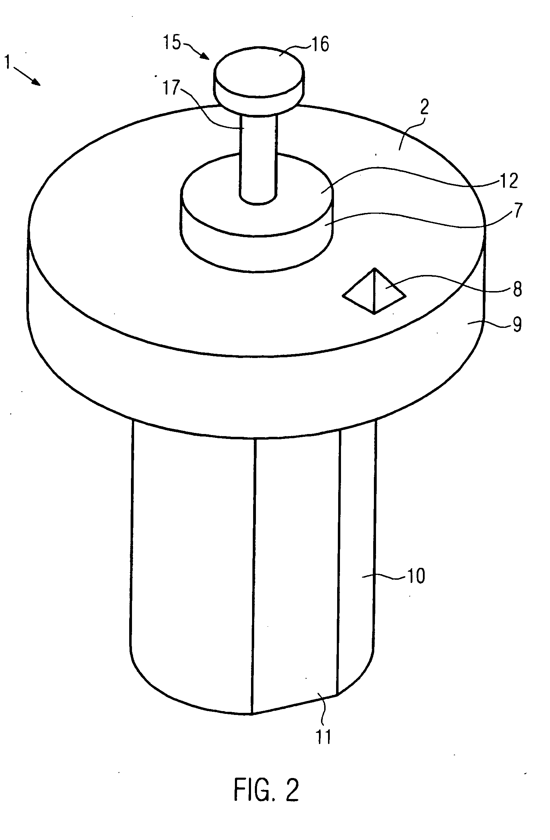

In Figur 2 ist eine Variante der Vorrichtung zum Halten des Modells eines Zahnersatzteils dargestellt. Sie unterscheidet sich von der Vorrichtung aus Figur 1 lediglich in dem Teil, der die Innenform eines Zahnersatzteils vorgibt. Hier ist zur Vorgabe der Innenform ein Element 15 mit einem Stab 17 und einem Kopf 16 ausgebildet. Dieser kann entweder in die Scheibe 7 eingesteckt worden sein oder einstückig mit dieser ausgebildet worden sein oder sonst wie mit der Scheibe befestigt worden sein (z. B. eingeschraubt). Auch die Variante in Figur 2 ist lediglich beispielhaft.

Es sei hier angemerkt, dass an sich durch die Vorrichtung zum Halten die Innenform des Zahnersatzteils nicht vorgegeben werden muss, da dies später bei der Erstellung eines Modells von digitalen Daten digital eingefügt werden kann. Um jedoch dem Modellierer eine bessere Übersicht über die spätere Struktur des Zahnersatzteils zu geben, ist es gemäß einer Alternative vorgesehen, dass das Modellstück bereits die Innenform des Zahnersatzteils aufweist. Beispielsweise für die Abschätzung von Wandstärken in dem Modell ist dies vorteilhaft.

Die Vorrichtung weist einen ersten Bereich auf, in dem das Modell aufmodelliert werden kann. Fehlt beispielsweise in Figur 2 das Element 15 mit dem Stab 17 und dem Kopf 16, so ist der erste Bereich durch die Oberfläche 12 der Scheibe 7 gegeben.

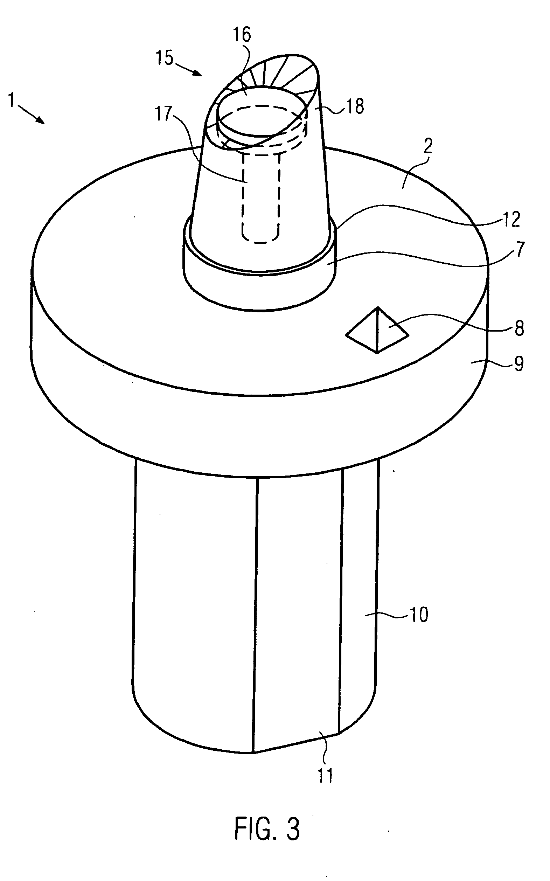

In Figur 3 ist der Halter aus Figur 2 mit einem aufmodellierten Zahnersatzteil dargestellt. Das Modell 18 des Zahnersatzteils wird beispielsweise aus Wachs auf der Oberfläche 12 um das Element 15 herummodelliert.

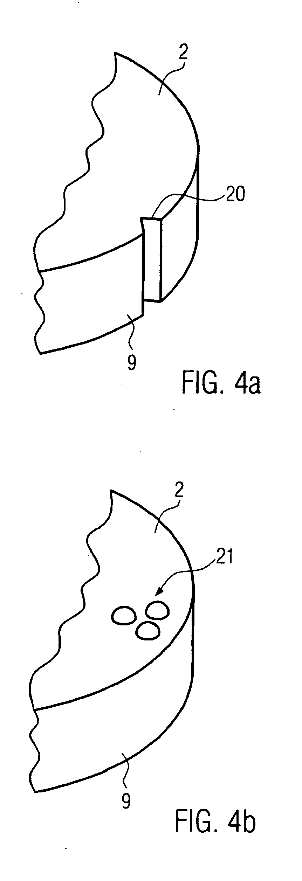

In Figur 4 a ist eine nicht beanspruchte Variante der Vorrichtung zum Halten gezeigt, bei der in der Scheibe 9 an der Seite eine Kerbe 20 vorgesehen ist, mit der ebenfalls eine eindeutige Lageidentifizierung der Vorrichtung zum Halten ermöglicht wird.

In Figur 4 b ist ein weiters Beispiel gezeigt, bei der drei Halbkugelelemente 21 auf der Oberfläche 2 der Scheibe 9 vorgesehen sind.

Eine Vorrichtung zum Halten mit einem Modell eines Zahnersatzteils 18, wie es in Figur 3 dargestellt ist, kann mit einer Scanvorrichtung abgescannt werden.

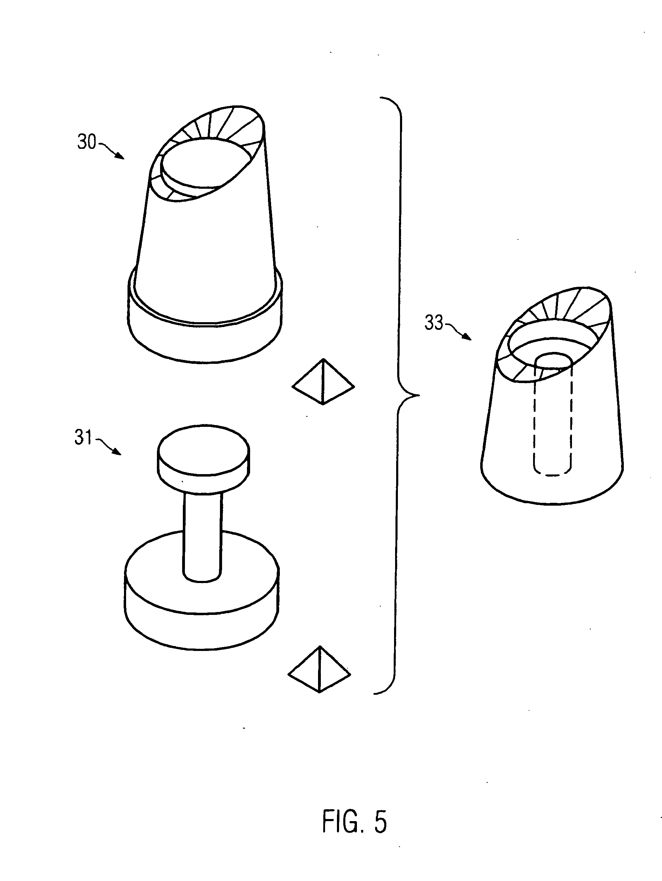

Dentalscanner für derartige Vorgänge sind bekannt. Mit einem solchen Dentalscanner können die Außenform des Modells 18, die freiliegende Oberfläche des Kopfes 16 und der Oberfläche 12 abgescannt werden. Damit kann die Außenform des Zahnersatzteils bestimmt werden. Weiterhin können mit dem Scanner beispielsweise die Oberfläche 2 und die Formmarkierung 8 erfasst werden. Auch die Kanten, die durch die Scheibe 7 gegeben werden bzw. die Scheibe 7 selbst können abgescannt werden. Ein entsprechend gewonnener Datensatz ist beispielhaft in Figur 5 mit der Bezugsziffer 30 dargestellt.

Bei einem Verfahren zum Erstellen eines digitalen Modells eines Zahnersatzteils ist weiterhin ein Datensatz vorhanden, der die gewünschte Innenform eines Zahnersatzteils wiedergibt. Ein entsprechender Datensatz ist in Figur 5 unter Bezugsziffer 31 dargestellt. Die Relation dieses Datensatzes zu einer Formmarkierung ist bekannt und ebenfalls gespeichert (siehe Figur 5).

Der in Figur 5 dargestellte Datensatz 31 gibt die tatsächlich gewünschte Innenform des Zahnersatzteils wieder, wohingegen die Formstücke in den Figuren 1, 2 und 3 lediglich eine Orientierungshilfe für das Erstellen des Modells sind. So kann der Datensatz 31, der im Wesentlichen der Form der Vorrichtung zum Halten aus Figur 2 entspricht, in seinem Durchmesser etwas größer sein, um so beispielsweise etwas Spiel für das Einsetzen einer Schraube oder Ähnliches zu ermöglichen.

Hier ist also festzuhalten, dass der Datensatz 31, der zur Erstellung des digitalen Modells verwendet wird, nicht zwangsläufig der Form, die in der Vorrichtung 1 zum Halten vorgegeben ist, exakt entsprechen muss, auch wenn dies natürlich möglich ist.

Die Daten 30 und 31 in Figur 5 können mit einem entsprechenden (Software-) Verfahren zusammengesetzt werden, um anschließend ein digitales Modell 33 eines Zahnersatzteils zu gewinnen. Hierzu können verschiedenste Verfahren eingesetzt werden. Beispielsweise kann die relative Anordnung des Datensatzes 30 und 31 anhand der eindeutigen Lageidentifizierung des Halters bestimmt werden und anschließend durch "Subtraktion" der beiden Datensätze das Modell 33 gewonnen werden. Das Modell 33 weist ein Abutment auf, in dem eine zentrale Öffnung für ein Schraubengewinde sowie Raum für den Kopf einer Schraube vorgegeben ist. Ein solches digitales Modell 33 kann einem bekannten CAM-Verfahren, wie etwa einem Fräsverfahren, 3D-Lithographie oder Ähnlichem zugeführt werden, um ein Zahnersatzteil herzustellen.

## Patentansprüche

1. Vorrichtung (1) zum Halten eines Modells (18) eines Abutments mit:
einem ersten Bereich (12, 3, 4, 5, 6, 15, 16, 17), in dem das Modell des Abutments aufmodelliert werden kann,
einem zweiten Bereich (2, 7, 8), der eine eindeutige Lageidentifizierung der Vorrichtung zum Halten erlaubt, und
einem Halteteil (10), mit dem die Vorrichtung zum Halten in einem Halter gehalten werden kann,
wobei der erste Bereich einer Innenform des Abutments entspricht oder wobei der erste Bereich zur Aufnahme eines Modellstücks ausgebildet ist und wobei das Modellstück (3,15) der Innenform des Abutments entspricht und in oder auf den ersten Bereich ein- oder aufgesetzt werden kann,
**dadurch gekennzeichnet, dass**
der zweite Bereich eine, zwei, drei oder mehr Formmarkierungen (8, 20, 21) aufweist, wobei die Formmarkierung (8, 20, 21) eine Erhöhung umfasst, und
der Halteteil (10) so ausgebildet ist, dass eine Halterung der Vorrichtung zum Halten in einer eindeutigen Lage im Halter möglich ist.

2. Vorrichtung nach Anspruch 1, **dadurch gekennzeichnet, dass** der zweite Bereich zumindest eine, zwei, drei oder mehr ebene Flächen (2, 8) umfasst.

3. Vorrichtung nach Anspruch 1 oder 2, **dadurch gekennzeichnet, dass** die Formmarkierung einen Wulst, einen Vorsprung, eine Kugel, eine Halbkugel, eine positive Kegel- oder Pyramidenform oder dergleichen umfasst.

4. Vorrichtung nach einem der Ansprüche 1 bis 3, **dadurch gekennzeichnet, dass** der zweite Bereich einen Verbindungsteil (7) umfasst, der mit dem ersten Bereich verbunden ist.

5. Vorrichtung nach Anspruch 4, **dadurch gekennzeichnet, dass** der Verbindungsteil (7) stab- oder scheibenförmig ist und bevorzugterweise von einer ebenen Fläche (2) absteht.

6. Vorrichtung nach Anspruch 1, **dadurch gekennzeichnet, dass** der Halteteil (10) stabförmig ist.

7. Vorrichtung zum Scannen von Abutments mit
einem Halter mit einer Vorrichtung nach einem der Ansprüche 1 bis 6, wobei diese Vorrichtung in dem Halter mit einer eindeutigen Lageorientierung gehalten und abgescannt werden kann.

## Claims

1. Device (1) for holding a model (18) of an abutment, comprising:
a first portion (12, 3, 4, 5, 6, 15, 16, 17) in which the model of the abutment can be modeled on,
a second portion (2, 7, 8) which allows a definite position identification of the holding device, and
a holding member (10) with which the holding device can be held in a holder,
wherein the first portion corresponds to an inner shape of the abutment or wherein the first portion is formed for receiving a model piece and wherein the model piece (3, 15) corresponds to the inner shape of the abutment and can be set in or on the first portion,
**characterized in that**
the second portion comprises one, two, three or more shape markings (8, 20, 21), wherein the shape marking (8, 20, 21) comprises an elevation, and
the holding member (10) is configured such that a holding of the holding device is possible in a definite position in the holder.

2. Device as claimed in claim 1, **characterized in that** the second portion comprises at least one, two, three or more planar surfaces (2, 8).

3. Device as claimed in claim 1 or 2, **characterized in that** the shape marking comprises a bead, a projection, a sphere, a hemisphere, a positive conical or pyramidal shape, or the like.

4. Device as claimed in one of claims 1 to 3, **characterized in that** the second portion comprises a connection portion (7) which is connected to the first portion.

5. Device as claimed in claim 4, **characterized in that** the connection portion (7) is rod-shaped or disk-shaped and preferably projects from a planar surface (2).

6. Device as claimed in claim 1, **characterized in that** the holding member (10) is rod-shaped.

7. Device for scanning abutments, comprising
a holder with a device as claimed in one of claims 1 to 6, wherein said device can be held and scanned in the holder with a definite position orientation.

## Revendications

1. Dispositif (1) destiné au maintien d'un modèle (18) de pilier dentaire ou pilier prothétique (abtument), comprenant :
une première zone (12, 3, 4, 5, 6, 15, 16, 17) dans laquelle il est possible de modeler le modèle du pilier prothétique,
une deuxième zone (2, 7, 8) qui permet une identification de position, claire et précise, sans équivoque possible, du dispositif de maintien, et
une partie de support (10) à l'aide duquel le dispositif de maintien peut être tenu dans un support,
dispositif dans lequel la première zone correspond à la forme intérieure du pilier prothétique, ou bien dans lequel la première zone est configurée pour recevoir une pièce de modèle, et dans lequel la pièce de modèle (3, 15) correspond à la forme intérieure du pilier prothétique et peut être insérée ou appliquée dans ou sur la première zone,
**caractérisé en ce que**
la deuxième zone comporte une, deux, trois marques de forme (8, 20, 21) ou davantage, la marque de forme (8, 20, 21) comprenant un élément en relief, et
la partie de support (10) est configurée de manière à pouvoir tenir le dispositif de maintien dans une position claire et précise, sans équivoque possible, dans le support.

2. Dispositif selon la revendication 1, **caractérisé en ce que** la deuxième zone comporte au moins une, deux, trois surfaces planes (2, 8) ou davantage.

3. Dispositif selon la revendication 1 ou la revendication 2, **caractérisé en ce que** la marque de forme comprend un bourrelet, un plot, une bille ou sphère, une demi-sphère, une forme positive de cône ou de pyramide, ou analogue.

4. Dispositif selon l'une des revendications 1 à 3, **caractérisé en ce que** la deuxième zone comprend une partie de liaison (7), qui est reliée à la première zone.

5. Dispositif selon la revendication 4, **caractérisé en ce que** la partie de liaison (7) présente une forme de tige ou de disque, et fait de préférence saillie d'une surface plane (2).

6. Dispositif selon la revendication 1, **caractérisé en ce que** la partie de support (10) présente une forme de tige.

7. Dispositif pour scanner des piliers prothétiques (abtuments), comprenant un support avec un dispositif selon l'une des revendications 1 à 6, ce dispositif étant tenu dans le support avec une orientation de position claire et précise, sans équivoque possible, et pouvant être scanné.
